# DEMANDE DE BREVET EUROPEEN

(11) **EP 1 220 407 A2**
(43) Date de publication de la demande: **03.07.2002**
(21) Numéro de dépôt: 01403345.0
(22) Date de dépôt: 21.12.2001
(51) Int. Cl.: H02G 15/04, H02G 3/06

(54) **Dispositif d'entrée de câble**

(30) Priorité: 29.12.2000 FR 0017301
(71) Demandeur: LEGRAND, F-87000 Limoges (FR); LEGRAND SNC, F-87000 Limoges (FR)
(72) Inventeur: Cornu, Hervé, 76770 Houppeville (FR); Taburet, Michel, 76480 Duclair (FR)
(74) Mandataire: Lepelletier-Beaufond, François

(57) **Abrégé**

Dispositif d'entrée de câble adapté à être fixé sur une paroi (2) munie à cet effet d'un orifice (3) traversant, ledit dispositif (1) comportant :
- une première pièce filetée (5) ;
- une deuxième pièce filetée (6) apte à être vissée sur ladite première pièce (5) ; et
- un moyen de maintien (40) du câble (4), incorporé à ladite deuxième pièce (6).

La première pièce (5) se présente sous la forme d'un pied à enfoncer en aveugle au travers dudit orifice (3) traversant, ledit pied (5) comportant des dents flexibles (12) pour permettre le pincement de la paroi (2) entre ladite deuxième pièce (6) et lesdites dents (12), et la fixation en aveugle du dispositif (1) sur ladite paroi (2).

## Description

L'invention concerne un dispositif d'entrée de câble adapté à être fixé sur une paroi munie à cet effet d'un trou traversant.

On connaît un dispositif d'entrée de câble comportant :
- une première pièce filetée, présentant une extrémité libre, un trou traversant, au moins une ouverture adaptée au passage d'un câble au travers du trou, ainsi qu'une surface d'appui radiale tournée du côté opposé à l'extrémité libre ;
- une deuxième pièce filetée apte à être vissée sur la première pièce, cette deuxième pièce présentant un trou traversant, au moins une ouverture adaptée au passage d'un câble au travers du trou, ainsi qu'une surface de butée adaptée à être en appui contre la paroi pour assurer la fixation du dispositif par pincement de la paroi entre la surface de butée et la surface d'appui ; et
- un moyen de maintien du câble, incorporé à la deuxième pièce ; la première et la deuxième pièce filetées comprenant respectivement une première et une deuxième portions filetées aptes à coopérer l'une avec l'autre.

Un dispositif de ce type est décrit dans le document FR-A-2 763 437 au nom de la demanderesse.

Pour fixer ce dispositif sur une paroi, on maintient d'une main la première pièce d'un côté de la paroi en regard de l'orifice, tandis que de l'autre main on introduit la deuxième pièce dans le trou pour la visser sur la première jusqu'à ce que la paroi se trouve pincée entre elles.

Ce type de dispositif donne entière satisfaction, cependant son usage se révèle difficile lorsque la paroi n'est accessible que d'un côté, ou lorsque l'on ne dispose que de l'usage d'une main.

L'invention vise à résoudre les inconvénients précités en proposant un dispositif d'entrée de câble qui soit à la fois pratique et simple d'utilisation, notamment dans des conditions d'accès, à la paroi et/ou à l'orifice, difficiles.

A cet effet, l'invention propose un dispositif d'entrée de câble adapté à être fixé sur une paroi munie à cet effet d'un orifice traversant, ledit dispositif comportant :
- une première pièce filetée, présentant une extrémité libre, un trou traversant, au moins une ouverture adaptée au passage d'un câble au travers dudit trou, ainsi qu'une surface d'appui radiale tournée du côté opposé à ladite extrémité libre ;
- une deuxième pièce filetée apte à être vissée sur ladite première pièce, ladite deuxième pièce présentant un trou traversant, au moins une ouverture adaptée au passage d'un câble au travers dudit trou, ainsi qu'une surface de butée adaptée à être en appui contre la paroi pour assurer la fixation du dispositif par pincement de la paroi entre ladite surface de butée et ladite surface d'appui ; et
- un moyen de maintien du câble, incorporé à ladite deuxième pièce ;
la première et la deuxième pièce filetées comprenant respectivement une première et une deuxième parties filetées aptes à coopérer l'une avec l'autre ; ledit dispositif étant caractérisé en ce que ladite première pièce se présente sous la forme d'un pied à enfoncer en aveugle du côté de son extrémité libre au travers dudit orifice traversant, ledit pied comportant des dents flexibles décalées axialement de ladite première partie filetée et qui, en l'absence de sollicitation, adoptent une position de repos dans laquelle elles saillent radialement du pied, et sont aptes à se rétracter élastiquement à partir de cette position de repos, lesdites dents présentant une surface radiale formant ladite surface d'appui, de sorte à permettre le pincement de la paroi entre ladite deuxième pièce et lesdites dents, et la fixation en aveugle du dispositif sur ladite paroi.

Ce dispositif présente notamment l'avantage de pouvoir être fixé en aveugle sur la paroi, par enfoncement du pied dans l'orifice pour l'y encliqueter grâce à ses dents, puis par vissage de la deuxième pièce sur le pied jusqu'à ce que la paroi se trouve pincée entre la surface de butée de la deuxième pièce et la surface d'appui des dents.

Selon un premier mode de réalisation, lesdites dents sont venues de matière avec le fût pour former avec lui un ensemble monobloc.

Selon une caractéristique, ce dispositif comprend des moyens pour freiner ou empêcher la libre rotation du pied par rapport à ladite paroi après l'enfoncement de celui-ci dans l'orifice, notamment lors du vissage de la deuxième pièce sur le pied, de sorte que la fixation du dispositif peut être effectuée d'une seule main.

Ces moyens se présentent par exemple sous la forme d'un organe élastiquement compressible recouvrant au moins en partie ledit fût au voisinage des dents du côté opposé à l'extrémité libre du fût, ledit organe étant apte à être comprimé sous l'effet d'une force radiale.

De préférence, cet organe compressible se présente sous la forme d'un bourrelet annulaire entourant le fût, propre notamment à assurer l'étanchéité de la liaison entre le pied et la paroi lorsque, le pied étant enfoncé dans l'orifice, ledit bourrelet est comprimé entre eux.

Selon d'autres caractéristiques, l'organe compressible est :
- fixé à demeure au fût ;
- surmoulé autour du fût ;
- réalisé dans un matériau élastomère.

En outre, le dispositif peut comprendre un deuxième organe élastiquement compressible qui s'étend radialement autour dudit fût, ce deuxième organe compressible présentant :
- une première surface qui, lorsque la deuxième pièce est vissée sur le pied, regarde la surface de butée de ladite deuxième pièce ; et
- une deuxième surface d'appui qui regarde la surface d'appui des dents,
ledit deuxième organe compressible étant apte à être comprimé sous l'effet d'une force axiale.

Ce deuxième organe compressible se présente par exemple sous la forme d'une jupe radiale annulaire entourant le fût, ladite jupe étant adaptée à être comprimée entre la surface de butée de la deuxième pièce et la paroi pour assurer au moins l'étanchéité entre elles.

La jupe peut être fixée à demeure audit pied, en étant intégré aux moyens pour freiner ou empêcher la rotation du pied dans la paroi lorsque celui-ci est enfoncé dans l'orifice.

Selon d'autres caractéristiques :
- le premier et le deuxième organes compressibles forment un ensemble monobloc ;
- le deuxième organe compressible se présente sous la forme d'une collerette venue de matière avec le premier organe compressible, ladite collerette étant située à distance des dents, de sorte qu'un espace libre est ménagé entre la deuxième surface d'appui de la collerette et les surfaces d'appui des dents ;
- ledit ensemble monobloc présente une section en forme de cornière.

Selon un deuxième mode de réalisation, lesdites dents sont rapportées, ledit dispositif comprenant à cet effet une couronne emmanchée sur le fût, cette couronne présentant sur sa périphérie une série de saillies axiales repliées vers l'extérieur pour former lesdites dents.

En outre, le dispositif comprend de préférence des moyens pour freiner ou empêcher la libre rotation du pied par rapport à ladite paroi après l'enfoncement de celui-ci dans l'orifice, notamment lors du vissage de la deuxième pièce sur le pied.

A cet effet, ladite couronne comprend par exemple une série de saillies axiales présentant chacune des bords longitudinaux repliés deux à deux vers l'extérieur pour former des griffes élastiques susceptibles de venir en prise avec l'orifice pratiqué dans la paroi pour freiner ou empêcher la libre rotation du pied par rapport à la paroi.

Selon un mode de réalisation, ledit fût présente une portion de section polygonale adaptée à recevoir ladite couronne, celle-ci étant également de section polygonale, de sorte à assurer l'immobilisation en rotation de l'un par rapport à l'autre.

La couronne peut être réalisée dans un matériau métallique.

Peut être également prévue une rondelle élastiquement compressible entourant le fût, ladite rondelle étant adaptée à être comprimée entre la surface de butée de ladite tête et la paroi pour assurer l'étanchéité entre elles.

Par ailleurs, le pied comprend par exemple un épaulement situé à distance des dents du côté opposé à la première extrémité libre, cet épaulement présentant une surface radiale formant butée, qui regarde les surfaces d'appui des dents, de sorte qu'un espace est ménagé entre les dents et ledit épaulement, cet espace étant de dimension axiale suffisante pour que, après enfoncement du pied dans l'orifice, ladite surface formant butée et les surfaces d'appui desdites dents soient situées de part et d'autre de la paroi, les moyens pour freiner ou empêcher la libre rotation du pied par rapport à la paroi après l'enfoncement de celui-ci dans l'orifice s'étendant au moins en partie au travers de cet espace.

Afin de recevoir la tête, le pied comprend par exemple une portion filetée s'étendant depuis ledit épaulement vers ladite ouverture.

Selon un mode de réalisation, le dispositif comporte en outre une membrane souple, élastique, de forme tronconique, comprenant :
- une première extrémité fixée à la ladite ouverture, et définissant une première embouchure ; et
- une deuxième extrémité, libre, définissant une deuxième embouchure tournée vers l'extrémité libre du pied,
cette membrane s'étendant, entre ses deux embouchures, au travers d'au moins une partie dudit trou traversant, cette membrane étant propre, par les choix combinés du matériau dans lequel elle est réalisée, des dimensions de sa deuxième embouchure, à rendre étanche sa liaison au câble.

Cette membrane est par exemple réalisée dans un matériau élastomère, et peut être surmoulée dans le pied.

Par ailleurs, la deuxième pièce du dispositif se présente par exemple sous la forme d'une tête cylindrique comportant :
- un alésage fileté au moins en partie ;
- une première extrémité, définissant une première ouverture sensiblement circulaire et formant ladite surface de butée ; et
- une deuxième extrémité opposée à la première, définissant une deuxième ouverture sensiblement circulaire.

Selon un mode de réalisation, la tête comprend en outre une membrane souple, élastique, fixée à sa deuxième extrémité, et formant un opercule déchirable obturant la deuxième ouverture.

Cet opercule, de forme circulaire, présente par exemple au voisinage de son centre une zone de moindre résistance dont l'enfoncement est apte à provoquer le déchirement de l'opercule.

L'opercule peut être réalisé dans un matériau élastomère, en étant surmoulé sur la tête.

Afin d'assurer le maintien du câble, peut être prévu un insert emmanché dans l'alésage de la tête, ledit insert et la tête étant coaxiaux, ledit insert comprenant :
- une partie annulaire ; et
- une pluralité de lamelles élastiques comportant chacune :
- une première partie saillant axialement de ladite partie annulaire en direction de la deuxième ouverture ; et
- une deuxième partie, recourbée vers la première ouverture et vers l'axe de l'insert, et se prolongeant en une extrémité libre formant une pointe apte à venir en prise avec le câble pour assurer son maintien ;
les pointes définissant ensemble, autour de l'axe de l'insert, un espace libre suffisant pour permettre le passage du câble.

L'insert est par exemple encliqueté dans la tête et emprisonné entre :
- une saillie radiale intérieure à distance de la première extrémité de la tête;
- au moins une butée à distance de ladite saillie ;

Afin d'assurer sa fixation sur le pied, la tête présente par exemple une partie filetée s'étendant entre la première extrémité et ladite saillie radiale.

Cette partie filetée présente par exemple un filetage interrompu, et comprend une pluralité de secteurs filetés séparés par des secteurs non filetés.

Selon un mode de réalisation, la tête comprend une série de bourrelets extérieurs s'étendant axialement, agencés pour faciliter la prise en main de ladite deuxième pièce, et, partant, permettre la fixation manuelle du dispositif sur la paroi, ces bourrelets étant par exemple venus de matière avec l'opercule décrit ci-dessus.

D'autres objets et avantages de l'invention apparaîtront au cours de la description qui va suivre de modes préférés de réalisation de l'invention, description faite, à titre illustratif mais non limitatif, en référence aux dessins annexés dans lesquels :
- la figure 1 est une vue d'élévation en coupe d'un dispositif d'entrée de câble à fixer en aveugle sur une paroi, selon un premier mode de réalisation où il comporte deux organes élastiquement compressibles formant un ensemble monobloc à section en forme de cornière ; sur cette figure, le dispositif est dans une position intermédiaire où le pied est enfoncé dans la paroi sans que le dispositif ne soit fixé à celle-ci, la tête n'étant pas complètement vissée sur le pied ;
- la figure 2 est une vue d'élévation en plan du pied du dispositif de la figure 1 ;
- la figure 3 est une vue en perspective en coupe partielle du pied de la figure 2 ;
- la figure 4 est une vue similaire à la figure 1, dans laquelle le dispositif est fixé sur la paroi après que la tête a été vissée à fond sur le pied ;
- la figure 5 est une vue similaire à la figure 4, dans laquelle la paroi présente une épaisseur supérieure à celle de la paroi de la figure 4 ;
- la figure 6 est une vue similaire à la figure 1 et aux figures 4 et 5, selon une variante de réalisation où la tête comprend des organes complémentaires de préhension sous la forme de bourrelets extérieurs ;
- la figure 7 est une vue d'élévation en plan de la tête du dispositif de la figure 6 ;
- la figure 8 est une vue en plan de dessus de la tête de la figure 7 ;
- la figure 9 est une vue similaire aux figures 4 à 6, selon une variante de réalisation où le dispositif comprend deux organes élastiquement compressibles dissociés ;
- la figure 10 est une vue similaire à la figure 1, selon un deuxième mode de réalisation où le pied du dispositif comprend des dents d'encliquetage rapportées ; une couronne métallique dentée est rapportée sur le pied ;
- la figure 11 est une vue en coupe du pied du dispositif de la figure 10 selon la ligne XI-XI de cette figure ;
- la figure 12 est une vue en plan de dessus de la couronne métallique des figures 10 et 11 ;
- la figure 13 est une vue d'élévation en plan de la couronne des figures 10 à 12.

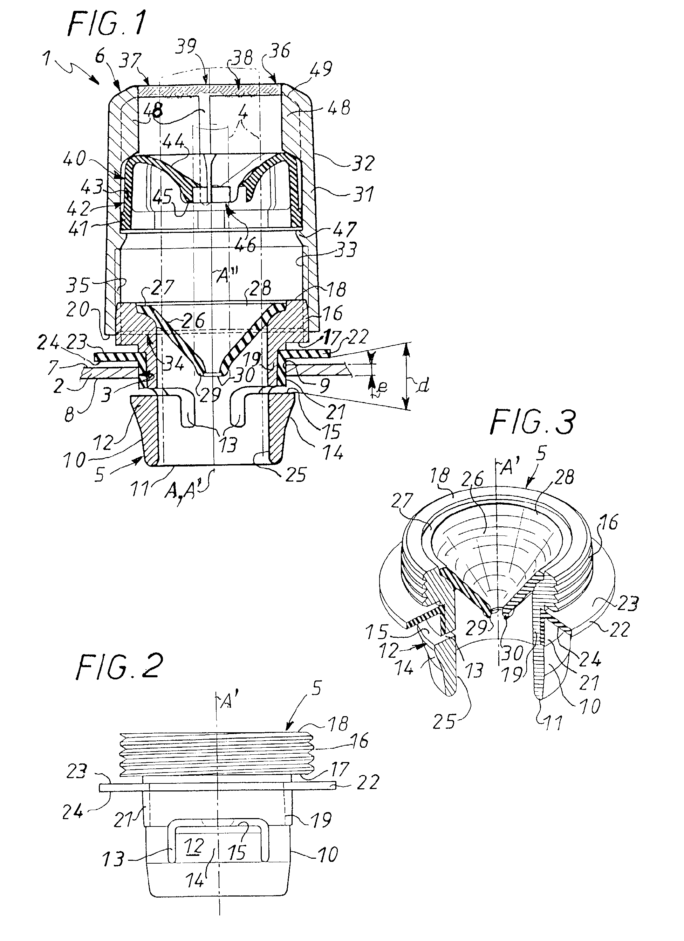

Sur les figures 1, 4, 5, 6, 9, 10 est représenté un dispositif d'entrée de câble 1 adapté à être fixé en aveugle sur une paroi 2 en y étant enfoncé au travers d'un orifice 3 traversant pratiqué dans cette paroi 2.

Le dispositif 1 est apte à permettre le passage étanche d'un câble 4 au travers de la paroi 2 par l'orifice 3, un tel dispositif étant également appelé presse-étoupe.

On décrit à présent ce dispositif 1 selon un premier mode de réalisation, en référence aux figures 1 à 5.

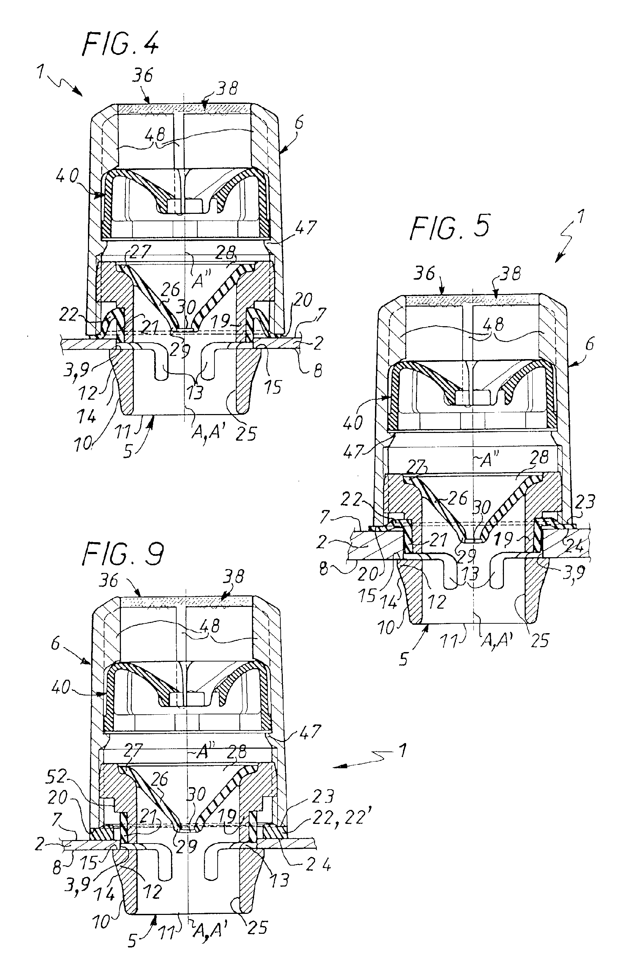

Le dispositif 1 comprend un pied 5 fileté, creux, apte à être enfoncé dans la paroi 2 pour y être encliqueté, ainsi qu'une tête 6 filetée creuse, apte à être vissée sur le pied 5 pour assurer la fixation du dispositif 1 sur la paroi 2 par pincement de la paroi 2 entre le pied 5 et la tête 6, tel que représenté sur les figures 4 et 5.

Le pied 5 et la tête 6 sont des pièces relativement rigides, réalisées ici dans un matériau plastique tel que polypropylène ou PVC.

La paroi 2 présente une première face 7 sensiblement plane, ainsi qu'une deuxième face 8 opposée à la première 7 et sensiblement parallèle à celle-ci.

L'orifice 3, qui est de section circulaire d'axe A, présente quant à lui une tranche 9 cylindrique qui relie les faces 7, 8.

On note e l'épaisseur de la paroi 2, c'est-à-dire la distance séparant la première face 7 de la deuxième face 8, ou encore la dimension longitudinale de la tranche 9 de l'orifice 3.

Le pied 5 présente globalement une symétrie de révolution d'axe A' qui, lorsque le pied 5 est enfoncé dans l'orifice 3, est sensiblement confondu avec l'axe A de ce dernier.

Le pied 5 comprend un fût 10 de forme sensiblement cylindrique présentant une extrémité libre 11 formant une première extrémité libre du pied 5 et qui, lorsque le pied 5 est enfoncé dans l'orifice 3, se trouve du côté de la deuxième face 8 de la paroi 2.

Le pied 5 comprend en outre des dents 12 flexibles qui, en l'absence de sollicitation, adoptent une position de repos (figure 1) dans laquelle elles saillent radialement du fût 10, et sont aptes à se rétracter élastiquement à partir de cette position de repos pour assurer l'encliquetage du pied 5 dans l'orifice 3.

Tel qu'il apparaît sur les figures 1 et 2, le pied 5 comprend deux dents 12 symétriques l'une de l'autre par rapport à l'axe A', chaque dent étant venue de matière avec le fût 10, et délimitée par une encoche 13 en forme de U pratiquée dans le fût 10.

Les dents 12 présentent une surface extérieure 14 inclinée et tournée vers l'extrémité libre 11, ainsi qu'une surface d'appui 15 radiale tournée du côté opposé à l'extrémité libre 11.

Le pied 5 se prolonge, du côté opposé à son extrémité libre 11, à une certaine distance axiale des dents, par une partie d'extrémité 16 filetée présentant un diamètre extérieur supérieur à celui du fût 10, de sorte que le pied 5 a sensiblement la forme d'un T selon une vue d'élévation en plan (figure 2).

La partie d'extrémité filetée 16 s'étend entre d'une part, au droit de sa jonction avec le fût 10, un épaulement formant une surface radiale annulaire de butée 17 qui regarde les surfaces d'appui 15 des dents 12, et une extrémité 18 formant une deuxième extrémité libre du pied 5, opposée à la première 11.

En outre, le fût 10 comprend, dans l'espace ménagé entre les surfaces d'appui 15 des dents 12 et l'épaulement 17, une partie 19 cylindrique formant une partie centrale du pied 5.

Naturellement, les dimensions extérieures du pied 5, à savoir notamment ses diamètres extérieurs aux niveaux de sa première extrémité libre 11, de la surface d'appui 15 des dents 12, de sa partie centrale 19 et de sa partie d'extrémité 16, ainsi que la dimension longitudinale de la partie centrale 19, sont choisies pour que le pied 5 puisse être enfoncé dans l'orifice 3 de sorte à pouvoir y être encliqueté sans difficulté.

Ainsi, lorsque le pied 5 est enfoncé dans l'orifice 3, les dents 12 viennent en contact avec sa tranche 9 par l'intermédiaire de leurs surfaces extérieures 14, et sont forcées à se rétracter radialement.

Et, après avoir traversé la paroi 2, les dents 12 reprennent, sous l'effet de leur élasticité propre, leur position de repos, leur surface d'appui 15 se trouvant alors en regard de la deuxième face 8 de la paroi 2.

La paroi 2 se trouve alors prise en sandwich entre les dents 12 et la partie d'extrémité 16, la tranche 9 de l'orifice étant située en regard de la partie centrale 19, tel que représenté sur la figure 1.

Bien entendu, la partie centrale 19 présente à cet effet une dimension longitudinale supérieure à l'épaisseur e de la paroi 2.

Sur la figure 1, le dispositif 1 est représenté dans une position dite intermédiaire où, bien qu'étant encliqueté dans l'orifice 3, le pied 5 se trouve relativement libre par rapport à la paroi 2 en translation longitudinale.

La fixation du dispositif 1 sur la paroi 2 est obtenue, après l'enfoncement et l'encliquetage du pied 5 dans l'orifice 3 du côté de son extrémité libre 11, par vissage à fond de la tête 6 sur le pied 5.

La tête 6 présente une première extrémité 20 formant une surface radiale annulaire de butée qui, lorsque la tête 6 est vissée sur le pied 5, est tournée vers les surfaces d'appui 15 des dents 12.

Le vissage à fond de la tête 6 sur le pied 5 depuis la position intermédiaire provoque le rapprochement de la surface de butée 20 et des surfaces d'appui 15 jusqu'à une position dite de fixation, illustrée sur les figures 4 et 5, dans laquelle la paroi 2 se trouve pincée entre la surface de butée 20 et la surface d'appui 15.

Afin d'éviter que lors du vissage de la tête 6 sur le pied 5, elle n'entraîne celui-ci en rotation autour de son axe A', l'on souhaite immobiliser en rotation le pied 5 par rapport à la paroi 2.

A cet effet, le pied 5 comprend une ceinture 21 qui entoure le fût 10 au voisinage des dents 12 du côté opposé à la première extrémité libre 11 en recouvrant la partie centrale 19.

Cette ceinture 21 est un organe élastiquement compressible, apte à être comprimé sous l'effet d'une force radiale dirigée depuis l'extérieur vers l'intérieur, et à se dilater, en l'absence de contrainte, sous l'effet de son élasticité propre.

La ceinture 21 est réalisée dans un matériau élastomère, et est fixée à demeure au fût 10 en étant surmoulée autour de celui-ci pour former autour de lui un bourrelet annulaire présentant une surface extérieure sensiblement cylindrique.

Ici, le matériau dans lequel est réalisée la ceinture 21 est choisi parmi les élastomères thermoplastiques présentant les caractéristiques suivantes :
- dureté comprise entre 35 et 45 shore A, mesurée suivant la méthode ASTM D 2240 ;
- déformation permanente sous pression comprise entre 15 % et 16 %, mesurée suivant la méthode B de l'ASTM D 395, à 23°C.

La géométrie de la ceinture 21, notamment son extension radiale, est choisie pour que, après que le pied 5 a été enfoncé au travers de l'orifice 3, la ceinture 21 soit en prise avec la tranche 9 de l'orifice 3, et se trouve comprimée entre ladite tranche 9 et la partie centrale 19 du pied 5.

Il en résulte, entre la ceinture 21 et la tranche 9 de l'orifice 3, une force de frottement qui s'oppose à la libre rotation du pied 5 dans la paroi 2 et qui permet le vissage de la tête 6 sans qu'il soit nécessaire de tenir le pied 5.

En comblant l'espace entre la partie centrale 19 et la tranche 9 de l'orifice 3, la ceinture 21 réalise aussi l'étanchéité de la liaison entre le pied 5 et la paroi 2.

Le dispositif 1 comprend en outre un deuxième organe compressible 22 sous la forme d'une jupe annulaire ou collerette qui s'étend radialement autour du fût 10.

La collerette 22 est venue de matière avec la ceinture 21 pour former avec elle un ensemble monobloc à section en forme de cornière, tel qu'il apparaît sur les figures 1 à 5.

La collerette 22 se trouve à proximité de l'épaulement 17 et à distance des dents 12, et présente une première surface radiale d'appui 23 tournée vers l'épaulement 17 - surface qui, lorsque la tête 6 est fixée sur le pied 5, regarde la surface de butée 20 -, ainsi qu'une deuxième surface radiale d'appui 24 opposée à la première 23, qui regarde la surface d'appui 11 des dents 12.

Ainsi est ménagé, entre la deuxième surface d'appui 24 et les surfaces d'appui 15 des dents 12, un espace libre qui présente, en l'absence de contrainte axiale sur la collerette 22, une dimension axiale d choisie pour être supérieure à l'épaisseur e de la paroi 2.

De la sorte, le dispositif 1 est adapté à différentes épaisseurs de paroi, tel qu'il apparaît sur les figures 4 et 5, la paroi 2 étant en fait prise en sandwich entre les dents 12 et la collerette 22.

La collerette 22 est apte à être comprimée sous l'effet d'une force axiale ; elle est prévue pour être comprimée entre la tête 6 et la paroi 2 de sorte que, lorsque le dispositif 1 est en position de fixation sur la paroi 2, la première et la deuxième surfaces d'appui 23, 24 sont respectivement en appui contre la surface de butée 20 de la tête 6 et première face 7 de la paroi 2 (figures 4 et 5).

Ainsi comprimée, la collerette 22 assure, premièrement, l'étanchéité de la liaison entre la tête 6 et la paroi 2. Elle assure, deuxièmement, un frein au dévissage de la tête 6, en agissant sur celle-ci à la manière d'un contre-écrou.

En effet, la collerette 22 exerce sur la tête 6, d'une part, une force de frottement par l'intermédiaire de sa première surface d'appui 23 contre la surface de butée 20, et d'autre part, sous l'effet de son élasticité propre, une force normale à la première face 7 de la paroi 2, force qui tend à éloigner la tête 6 de la paroi 2 et à bloquer les filets respectifs de la tête 6 et du pied 5.

Par ailleurs, lorsqu'elle se trouve comprimée entre la tête 6 et la paroi 2, la collerette 22 exerce, par l'intermédiaire de sa deuxième surface d'appui 24, une force de frottement sur la première face 7 de la paroi 2. La collerette 22 constitue de ce fait un frein complémentaire à la libre rotation du pied 5 par rapport à la paroi 2.

Afin de permettre le passage du câble 4, le pied 5 présente un trou traversant 25, sensiblement cylindrique, qui s'étend depuis la première extrémité 11 jusqu'à la deuxième extrémité 18.

Et, afin de rendre étanche la liaison du pied 5 au câble 4, le pied 5 comprend en outre une membrane souple 26, élastique, de forme tronconique d'axe A'.

La membrane 26 comprend d'une part une première extrémité 27, fixée à la deuxième extrémité 18 du pied 5, et qui définit une première embouchure 28 par laquelle le câble 4 peut être introduit dans le pied 5 au travers du trou traversant 25.

La membrane 26 comprend d'autre part une deuxième extrémité 29, libre, qui définit une deuxième embouchure 30, tournée vers la première extrémité 11 du pied 5.

La membrane 26 s'étend, entre ses deux embouchures 28, 30, au travers d'une partie au moins du trou 25, tel qu'il apparaît sur les figures 1 et 2, 4 et 5.

Le diamètre intérieur de la deuxième embouchure 30 est choisi inférieur au diamètre extérieur du câble 4, de sorte que, lorsque le câble 4 est introduit dans le trou 25, la deuxième embouchure 30 se distend pour épouser la surface extérieure du câble 4, remplissant ainsi sa fonction d'étanchéité.

La membrane 26 est ici réalisée dans le même matériau que la ceinture 21 et la collerette 22 ; elle est surmoulée sur le pied en même temps qu'elles.

L'on décrit à présent la tête 6.

Tel qu'il apparaît sur les figures 1, 4, 5, la tête 6 se présente sous la forme d'un capuchon comprenant une jupe 31 sensiblement cylindrique d'axe A" qui, lorsque la tête 6 est vissée sur le pied 5, est sensiblement confondu avec l'axe A' de celui-ci.

La jupe 31 présente une surface extérieure 32, ainsi qu'une surface intérieure 33 formant dans la tête 6 un alésage traversant.

L'alésage 33 s'étend depuis l'extrémité libre 20, qui forme une première ouverture circulaire 34, à proximité de laquelle l'alésage présente une partie filetée 35, jusqu'à une deuxième extrémité libre 36, opposée à la première 20.

Cette deuxième extrémité 36 définit une deuxième ouverture 37 essentiellement circulaire, d'un diamètre suffisant pour permettre le passage du câble 4.

Est fixée à la deuxième extrémité 36 une membrane souple 38 élastique formant un opercule déchirable qui obture la deuxième ouverture 37.

Cet opercule 38, de forme circulaire, présente au voisinage de son centre une zone de moindre résistance 39 dont l'enfoncement, notamment lors de l'introduction du câble 4, est apte à provoquer le déchirement de l'opercule 38.

L'opercule 38 est ici surmoulé sur la tête 6 ; il est réalisé dans le même matériau que la membrane 26.

Afin d'assurer le maintien du câble 4 dans la tête 6, celle-ci comprend en outre un insert 40 emmanché et fixé dans l'alésage 33, coaxial avec la tête 6.

Cet insert 40 comprend une partie annulaire 41 ainsi qu'une pluralité de lamelles élastiques 42 formant crochet, réparties en étoile, et comportant chacune une première partie 43 saillant axialement de la partie annulaire 41 en direction de la deuxième ouverture 37 de la tête 6, ainsi qu'une deuxième partie 44, radiale, recourbée vers l'intérieur et vers la première ouverture 20.

Chaque partie radiale 44 se prolonge en une extrémité libre 45 formant une pointe apte à venir en prise avec la surface extérieure du câble 4 pour empêcher son retrait de la tête 6, les extrémités libres 45 définissant ensemble autour de l'axe de l'insert 40, un espace libre 46 suffisant pour permettre le passage du câble 4.

Afin d'assurer le maintien de l'insert 40 dans la tête 6, celle-ci comprend, d'une part, à distance de sa première extrémité 20, un bourrelet annulaire 47 saillant de la surface intérieure 33, et d'autre part, des ailettes 48 saillant de la surface intérieure 33 à proximité de la deuxième ouverture 37.

La tête 6 présente, à sa deuxième extrémité libre 36, une paroi de fond radiale annulaire 49 définissant la deuxième ouverture 37, les ailettes s'étendant axialement jusqu'à cette paroi de fond 49.

L'insert 40 est encliqueté dans la tête 6 en étant emprisonné entre le bourrelet 47 et les ailettes 48.

Ainsi, le câble 4 peut être introduit sans difficulté dans la tête en forçant les parties radiales 44 des lamelles 42 à ployer vers l'extérieur. Par contre, les lamelles 42 empêchent le retrait intempestif du câble 4 en mordant sa surface extérieure.

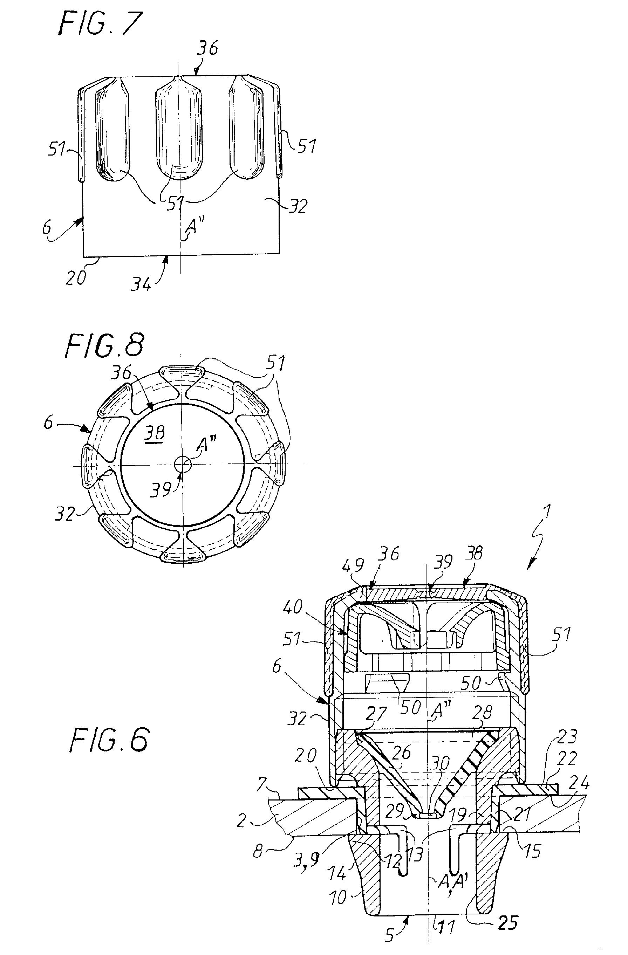

Une première variante de réalisation est illustrée sur la figure 6. Cette première variante se distingue de ce qui précède en ce que la tête 6 est dépourvue d'ailettes, et, au lieu du bourrelet 47 précité, comprend des dents 50 d'encliquetage saillant radialement de la surface intérieure 33. L'insert 40 est encliqueté entre ces dents 50 et la paroi de fond 49.

Sur les figures 6 à 8 est illustrée une deuxième variante de réalisation, selon laquelle la tête 6 comporte des moyens complémentaires de préhension visant à faciliter la prise en main de la tête 6 et à augmenter le couple de serrage qui peut lui être appliqué lors de son vissage sur le pied 5.

Ces moyens complémentaires de préhension se présentent sous la forme d'une série de bourrelets extérieurs 51 s'étendant axialement sur la surface extérieure 32 de la tête 6.

Afin de simplifier la fabrication de la tête, ces bourrelets 51 sont surmoulés sur la tête 6 simultanément à l'opercule 38 avec lequel ils sont venus de matière.

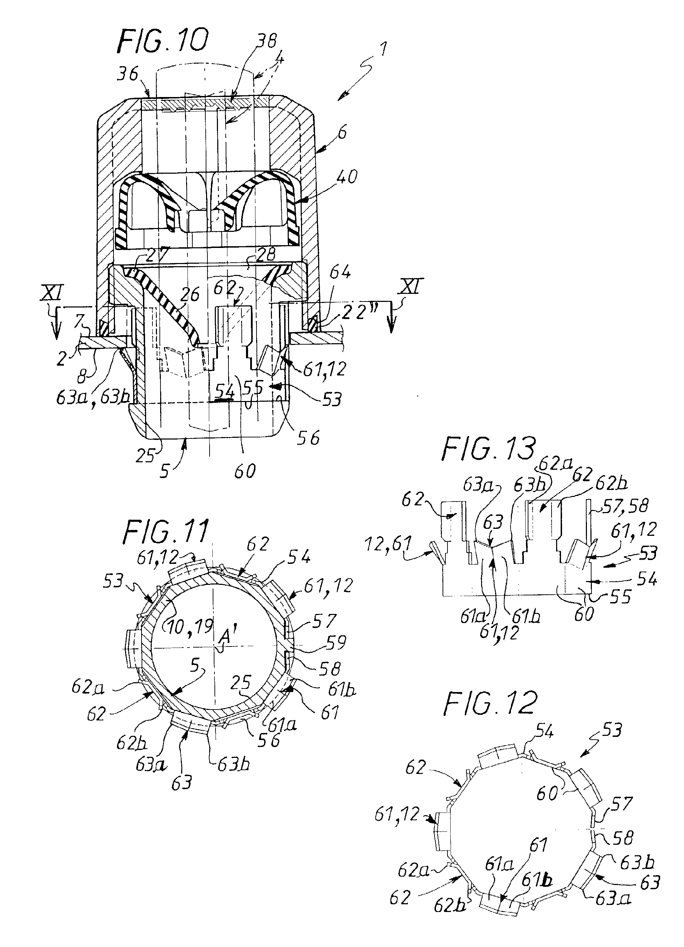

Une troisième variante de réalisation est illustrée sur la figure 9.

Cette variante se distingue de ce qui précède en ce que le deuxième organe compressible 22 se présente sous la forme d'une rondelle 22' et non d'une collerette, cette rondelle 22' étant emmanchée sur le fût 10, tout en étant dissociée de celui-ci.

A cet effet, le fût 10 comprend, entre la partie centrale 19 et l'épaulement 17, un épaulement 52 apte à recevoir la rondelle 22' lors de son emmanchement.

Cette rondelle 22' exerce les mêmes fonctions que la collerette précédemment décrite, excepté le freinage ou le blocage en rotation du pied 5.

Selon une quatrième variante, illustrée sur la figure 6, la ceinture 21 présente une surface extérieure de forme tronconique, de sorte à pouvoir s'adapter à des orifices dont les diamètres sont légèrement différents, et ainsi permettre une certaine tolérance lors de la réalisation de l'orifice 3.

Dans une autre variante, la ceinture est une bande rapportée sur le fût en étant emmanchée sur celui-ci, et tenant sur lui du fait de son élasticité propre.

Dans une variante non illustrée, la tête 6 présente un filetage interrompu, la partie filetée 35 de la tête 6 se composant de plusieurs secteurs angulaires filetés uniformément répartis sur la circonférence de la surface intérieure 33, ces secteurs filetés étant séparés par des secteurs non filetés.

Dans une autre variante non illustrée, la partie filetée de la tête présente un filetage double, et comprend deux filets imbriqués, ce qui permet une plus grande rapidité de serrage et évite un serrage excessif de la tête sur le pied lors de son vissage.

Bien entendu, on peut prévoir par ailleurs que le pied comprenne un nombre de dents supérieur à deux.

Les dimensions et les matériaux dans lesquels sont réalisés la ceinture 21, la collerette 22 ou la rondelle 22' peuvent bien entendu être différents de ceux donnés plus haut à titre d'exemple.

En particulier, l'homme du métier pourra choisir pour la ceinture 21 un matériau plus ou moins compressible, et un diamètre extérieur plus ou moins important, selon qu'il veuille freiner ou empêcher la rotation du pied 5 dans l'orifice 3.

On décrit à présent le dispositif 1 selon un deuxième mode de réalisation, en référence aux figures 10 à 13. Il est à noter que certaines des variantes de réalisation qui viennent d'être décrites peuvent également s'appliquer à ce deuxième mode de réalisation.

Celui-ci se distingue du premier mode de réalisation essentiellement en ce qui concerne les points suivants : premièrement, la réalisation des dents d'encliquetage du pied 5 ; deuxièmement, la réalisation des moyens aptes à freiner ou empêcher la libre rotation du pied 5 dans la paroi 2 ; troisièmement, la réalisation du deuxième organe élastique 22.

Les éléments communs au premier mode de réalisation portent bien entendu les mêmes références que précédemment.

Le pied 5 comprend une couronne métallique dentée 53 emmanchée sur le fût 10 et entourant la partie centrale 19 en étant immobilisée en rotation sur cette dernière.

La couronne 53 comprend une partie de base 54 continue à profil polygonal en coupe transversale dont une extrémité 55, tournée vers la première l'extrémité libre 11 du pied, est en appui contre un épaulement 56 du fût 10, tourné à l'opposé.

La partie centrale 19 présente en coupe transversale un profil polygonal complémentaire de la couronne 53, tel qu'il apparaît sur la figure 11.

La couronne 53 est réalisée par emboutissage d'une tôle d'acier présentant deux extrémités opposées 57, 58, puis pliage de cette tôle jusqu'à ce que ses extrémités 57, 58 se trouvent en regard l'une de l'autre.

La couronne 53 étant en position sur le pied 5, les extrémités 57, 58 sont en butée de part et d'autre d'une saillie 59 du fût 10, étendue axialement.

De la sorte, la couronne 53 est immobilisée en rotation sur le fût 10.

La partie de base 54 comprend une pluralité de zones 60 adjacentes formant les côtés du polygone.

La couronne 53 comprend en outre une première et une deuxième séries alternées de saillies axiales 61, 62 issues de la partie de base 54 en direction de la partie filetée 16, chaque saillie axiale étant issue d'une zone 60.

Les saillies 61 de la première série sont pliées vers l'extérieur pour former les dents 12 d'encliquetage du pied 5. Chaque saillie 61 comprend deux branches 61a, 61b formant un profilé en V dans un plan de coupe transversal (figure 12).

Chaque saillie 61 comprend en outre une extrémité libre 63 à profil en V dans un plan d'élévation (figure 13), définissant deux pointes 63a, 63b aptes à venir en prise avec la deuxième face 8 de la paroi 2 en mordant cette dernière, tel qu'il apparaît sur la figure 10.

De la sorte, les dents 12, qui présentent une certaine élasticité, ont une double fonction d'encliquetage du pied 5 et de frein à la libre rotation de celui-ci par rapport à la paroi 2.

Les saillies 62 de la deuxième série comprennent deux bords longitudinaux opposés 62a, 62b repliés vers l'extérieur pour former des griffes élastiques aptes à venir en prise avec la tranche 9 de l'orifice 3 lorsque le pied 5 est enfoncé dans celui-ci.

En mordant la tranche 9, les griffes 62a, 62b forment ainsi un moyen pour freiner, voire empêcher la libre rotation du pied 5 dans la paroi 2 et permettre le vissage de la tête 6.

Cette dernière comporte quant à elle une rondelle frein intégrée 22" sous la forme d'un anneau élastiquement compressible emmanché dans un logement 64 annulaire complémentaire pratiqué dans la première extrémité 20 de la tête 6, tel qu'il apparaît sur la figure 10.

On comprend que cette rondelle frein 22" exerce les mêmes fonctions que la rondelle 22' décrite plus haut.

## Revendications

1. Dispositif d'entrée de câble adapté à être fixé sur une paroi (2) munie à cet effet d'un orifice (3) traversant, ledit dispositif (1) comportant
- une première pièce filetée (5), présentant une extrémité libre (11), un trou traversant (25), au moins une ouverture adaptée au passage d'un câble (4) au travers dudit trou (25), ainsi qu'une surface d'appui radiale (15) tournée du côté opposé à ladite extrémité libre (11) ;
- une deuxième pièce filetée (6) apte à être vissée sur ladite première pièce (5), ladite deuxième pièce (6) présentant un trou traversant (33), au moins une ouverture (37) adaptée au passage d'un câble (4) au travers dudit trou (33), ainsi qu'une surface de butée (20) adaptée à être en appui contre la paroi (2) pour assurer la fixation du dispositif (1) par pincement de la paroi (2) entre ladite surface de butée (20) et ladite surface d'appui (15) ; et
- un moyen de maintien (40) du câble (4), incorporé à ladite deuxième pièce (6) ;
la première (5) et la deuxième (6) pièces filetées comprenant respectivement une première (16) et une deuxième (35) parties filetées aptes à coopérer l'une avec l'autre ;
ledit dispositif (1) étant **caractérisé en ce que** ladite première pièce (5) se présente sous la forme d'un pied à enfoncer en aveugle du côté de son extrémité libre (11) au travers dudit orifice (3) traversant, ledit pied (5) comportant des dents flexibles (12) décalées axialement de ladite première partie filetée (16) et qui, en l'absence de sollicitation, adoptent une position de repos dans laquelle elles saillent radialement du pied (5), et sont aptes à se rétracter élastiquement à partir de cette position de repos, lesdites dents (12) présentant une surface radiale (15) formant ladite surface d'appui, de sorte à permettre le pincement de la paroi (2) entre ladite deuxième pièce (6) et lesdites dents (12), et la fixation en aveugle du dispositif (1) sur ladite paroi (2).

2. Dispositif d'entrée de câble selon la revendication 1, **caractérisé en ce que** lesdites dents (12) sont venues de matière avec le fût (10) pour former avec lui un ensemble monobloc.

3. Dispositif d'entrée de câble selon la revendication 2, **caractérisé en ce qu'**il comprend des moyens pour freiner ou empêcher la libre rotation du pied (5) par rapport à ladite paroi (2) après l'enfoncement de celui-ci dans l'orifice (3), notamment lors du vissage de la deuxième pièce (6) sur le pied (5).

4. Dispositif d'entrée de câble selon la revendication 3, **caractérisé en ce que** lesdits moyens se présentent sous la forme d'un organe (21) élastiquement compressible recouvrant au moins en partie ledit fût (10) au voisinage des dents (12) du côté opposé à l'extrémité libre (11) du fût (10), ledit organe (21) étant apte à être comprimé sous l'effet d'une force radiale.

5. Dispositif d'entrée de câble selon la revendication 4, **caractérisé en ce que** ledit organe compressible (21) se présente sous la forme d'un bourrelet annulaire entourant le fût (10).

6. Dispositif d'entrée de câble selon la revendication 5, **caractérisé en ce que** ledit bourrelet annulaire (21) est propre à assurer en outre l'étanchéité de la liaison entre le pied (5) et la paroi (2) lorsque, le pied (5) étant enfoncé dans l'orifice (3), ledit bourrelet (21) est comprimé entre eux.

7. Dispositif d'entrée de câble selon l'une des revendications 4 à 6, **caractérisé en ce que** ledit organe compressible (21) est fixé à demeure au fût (10).

8. Dispositif d'entrée de câble selon la revendication 7, **caractérisé en ce que** ledit organe compressible (21) est surmoulé autour du fût (10).

9. Dispositif d'entrée de câble selon l'une des revendications 4 à 8, **caractérisé en ce que** ledit organe (21) est réalisé dans un matériau élastomère.

10. Dispositif d'entrée de câble selon l'une des revendications 4 à 9, **caractérisé en ce qu'**il comprend en outre un deuxième organe (22) élastiquement compressible qui s'étend radialement autour dudit fût (10), ce deuxième organe (22) compressible présentant :
- une première surface (23) qui, lorsque la deuxième pièce (6) est vissée sur le pied (5), regarde la surface de butée (20) de ladite deuxième pièce (6) ; et
- une deuxième surface d'appui (24) qui regarde la surface d'appui (15) des dents (12),
ledit deuxième organe compressible (22) étant apte à être comprimé sous l'effet d'une force axiale.

11. Dispositif d'entrée de câble selon la revendication 10, **caractérisé en ce que** ledit deuxième organe compressible (22) se présente sous la forme d'une jupe radiale annulaire entourant le fût (10), ladite jupe (22) étant adaptée à être comprimée entre la surface de butée (20) de la deuxième pièce (6) et la paroi (2) pour assurer au moins l'étanchéité entre elles.

12. Dispositif d'entrée de câble selon la revendication 11, **caractérisé en ce que** ladite jupe (22) est fixée à demeure audit pied (5).

13. Dispositif d'entrée de câble selon l'une des revendications 10 à 12, **caractérisé en ce que** ledit deuxième organe compressible (22) est intégré aux moyens pour freiner ou empêcher la rotation du pied (5) dans la paroi (2) lorsque celui-ci est enfoncé dans l'orifice (3).

14. Dispositif d'entrée de câble selon la revendication 13, **caractérisé en ce que** le premier (21) et le deuxième (22) organes compressibles forment un ensemble monobloc.

15. Dispositif d'entrée de câble selon la revendication 14, **caractérisé en ce que** le deuxième organe compressible (22) se présente sous la forme d'une collerette venue de matière avec le premier organe compressible (21), ladite collerette (22) étant située à distance des dents (12), de sorte qu'un espace libre est ménagé entre la deuxième surface (24) d'appui de la collerette (22) et les surfaces d'appui des dents (12).

16. Dispositif d'entrée de câble selon la revendication 15, **caractérisé en ce que** ledit ensemble monobloc présente une section en forme de cornière.

17. Dispositif d'entrée de câble selon la revendication 1, **caractérisé en ce que** lesdites dents (12) sont rapportées, ledit dispositif (1) comprenant à cet effet une couronne (53) emmanchée sur le fût (10), cette couronne (53) présentant sur sa périphérie une série de saillies axiales (61) repliées vers l'extérieur pour former lesdites dents (12).

18. Dispositif d'entrée de câble selon la revendication 17, **caractérisé en ce qu'**il comprend en outre des moyens pour freiner ou empêcher la libre rotation du pied (5) par rapport à ladite paroi (2) après l'enfoncement de celui-ci dans l'orifice (3), notamment lors du vissage de la deuxième pièce (6) sur le pied (5).

19. Dispositif d'entrée de câble selon la revendication 18, **caractérisé en ce que** ladite couronne (53) comprend une série de saillies axiales (62) présentant chacune des bords longitudinaux (62a, 62b) repliés deux à deux vers l'extérieur pour former des griffes élastiques susceptibles de venir en prise avec l'orifice (3) pratiqué dans la paroi (2) pour freiner ou empêcher la libre rotation du pied (5) par rapport à la paroi (2).

20. Dispositif d'entrée de câble selon l'une des revendications 17 à 19, **caractérisé en ce que** ledit fût (10) présente une portion de section polygonale adaptée à recevoir ladite couronne (53), celle-ci étant également de section polygonale, de sorte à assurer l'immobilisation en rotation de l'un par rapport à l'autre.

21. Dispositif d'entrée de câble selon l'une des revendications 17 à 20, **caractérisé en ce que** ladite couronne (53) est réalisée dans un matériau métallique.

22. Dispositif d'entrée de câble selon l'une des revendications 17 à 21, **caractérisé en ce qu'**il comprend en outre une rondelle (22, 22') élastiquement compressible entourant le fût (10), ladite rondelle (22, 22') étant adaptée à être comprimée entre la surface de butée (20) de ladite deuxième pièce (6) et la paroi (2) pour assurer l'étanchéité entre elles.

23. Dispositif d'entrée de câble selon l'une des revendications 1 à 22, **caractérisé en ce que** le pied (5) comprend un épaulement (17) situé à distance des dents (12) du côté opposé à la première extrémité libre (11), cet épaulement (17) formant une surface radiale formant butée, qui regarde les surfaces d'appui (15) des dents (12), de sorte qu'un espace est ménagé entre les dents (12) et ledit épaulement (17), cet espace étant de dimension axiale suffisante pour que, après enfoncement du pied (5) dans l'orifice (3), ladite surface formant butée (17) et les surfaces d'appui (15) desdites dents (12) soient situées de part et d'autre de la paroi (2).

24. Dispositif d'entrée de câble selon la revendication 23, **caractérisé en ce que**, ledit dispositif (1) comprenant des moyens pour freiner ou empêcher la libre rotation du pied (5) par rapport à la paroi (2) après l'enfoncement de celui-ci dans l'orifice (3), ces moyens s'étendent au moins en partie au travers de l'espace ménagé entre lesdites dents (12) et ledit épaulement (17).

25. Dispositif d'entrée de câble selon la revendication 23 ou la revendication 24, **caractérisé en ce que** le pied (5) comprend une portion filetée (16) s'étendant depuis ledit épaulement (17) vers ladite ouverture.

26. Dispositif d'entrée de câble selon l'une des revendications 1 à 25, **caractérisé en ce qu'**il comporte en outre une membrane souple (26), élastique, de forme tronconique, comprenant :
- une première extrémité (27) fixée à la ladite ouverture, et définissant une première embouchure (28) ; et
- une deuxième extrémité (29), libre, et définissant une deuxième embouchure (30) tournée vers l'extrémité libre (11) du pied (5),
cette membrane (26) s'étendant, entre ses deux embouchures (28, 30), au travers d'au moins une partie dudit trou traversant (25), cette membrane (26) étant propre, par les choix combinés du matériau dans lequel elle est réalisée, des dimensions de sa deuxième embouchure (30), à rendre étanche sa liaison au câble (4).

27. Dispositif d'entrée de câble selon la revendication 26, **caractérisé en ce que** ladite membrane (26) est réalisée dans un matériau élastomère.

28. Dispositif d'entrée de câble selon l'une des revendications 26 ou 27, **caractérisé en ce que** ladite membrane (26) est surmoulée dans le pied (5).

29. Dispositif d'entrée de câble selon l'une des revendications 1 à 28, **caractérisé en ce que** la deuxième pièce (6) se présente sous la forme d'une tête cylindrique comportant :
- un alésage (33) fileté au moins en partie ;
- une première extrémité (20), définissant une première ouverture (34) sensiblement circulaire et formant ladite surface de butée (20) ; et
- une deuxième extrémité (36) opposée à la première (20), définissant une deuxième ouverture (37) sensiblement circulaire.

30. Dispositif d'entrée de câble selon la revendication 29, **caractérisé en ce que** la tête (6) comprend en outre une membrane souple (38), élastique, fixée à sa deuxième extrémité (36), et formant un opercule déchirable obturant la deuxième ouverture (37).

31. Dispositif d'entrée de câble selon la revendication 30, **caractérisé en ce que** ledit opercule (38), de forme circulaire, présente au voisinage de son centre une zone de moindre résistance (39) dont l'enfoncement est apte à provoquer le déchirement de l'opercule (38).

32. Dispositif d'entrée de câble selon la revendication 30 ou la revendication 31, **caractérisé en ce que** ledit opercule (38) est réalisé dans un matériau élastomère.

33. Dispositif d'entrée de câble selon l'une des revendications 30 à 32, **caractérisé en ce que** ledit opercule (38) est surmoulé sur la tête (6).

34. Dispositif d'entrée de câble selon l'une des revendications 29 à 33, **caractérisé en ce qu'**il comprend en outre un insert (40) emmanché dans l'alésage (33) de la tête (6), ledit insert (40) et la tête (6) étant coaxiaux, ledit insert (40) comprenant :
- une partie annulaire (41) ; et
- une pluralité de lamelles élastiques (42) comportant chacune :
- une première partie (43) saillant axialement de ladite partie annulaire (41) en direction de la deuxième ouverture (37) ; et
- une deuxième partie (44), recourbée vers la première ouverture (34) et vers l'axe de l'insert (40), et se prolongeant en une extrémité libre (45) formant une pointe apte à venir en prise avec le câble (4) pour assurer son maintien ;
les pointes (45) définissant ensemble, autour de l'axe de l'insert (40), un espace libre (46) suffisant pour permettre le passage du câble (4).

35. Dispositif d'entrée de câble selon la revendication 34, **caractérisé en ce que** la tête (6) comprend en outre :
- à distance de sa première extrémité (20), au moins une saillie radiale intérieure (47, 50) ;
- à distance de ladite saillie (47, 50), au moins une butée (48, 52) ;
ledit insert (40) étant encliqueté dans la tête (6) et emprisonné entre ladite saillie (47, 50) et ladite butée (48, 52).

36. Dispositif d'entrée de câble d'entrée de câble selon l'une des revendications 29 à 35, **caractérisé en ce que** la tête (6) présente une partie filetée (35) s'étendant entre la première extrémité (20) et lesdites saillies radiales (47, 50).

37. Dispositif d'entrée de câble selon la revendication 36, **caractérisé en ce que** ladite partie filetée (35) présente un filetage interrompu, et comprend une pluralité de secteurs filetés séparés par des secteurs non filetés.

38. Dispositif d'entrée de câble selon la revendication 36, **caractérisé en ce que** ladite partie filetée (35) présente un filetage double, et comprend deux filets imbriqués.

39. Dispositif d'entrée de câble selon l'une des revendications 1 à 38, **caractérisé en ce que** la tête (6) comprend une série de bourrelets extérieurs (51) s'étendant axialement, agencés pour faciliter la prise en main de la tête (6), et, partant, permettre la fixation manuelle du dispositif (1) sur la paroi (2).

40. Dispositif d'entrée de câble selon l'une des revendications 30 à 33, **caractérisé en ce que** ladite deuxième pièce (6) comprend une série de bourrelets extérieurs (51) s'étendant axialement, agencés pour faciliter la prise en main de ladite deuxième pièce (6), et, partant, permettre la fixation manuelle du dispositif (1) sur la paroi (2), lesdits bourrelets (51) étant venus de matière avec ledit opercule (38).
